# EUROPEAN PATENT SPECIFICATION

(11) **EP 0 783 637 B1**
(45) Date of publication and mention of the grant of the patent: **17.02.1999**
(21) Application number: 95932089.6
(22) Date of filing: 21.09.1995
(51) Int. Cl.: F16C 32/04

(54) **AN ELECTROMAGNETIC BEARING**
MAGNETLAGER
PALIER ELECTROMAGNETIQUE

(30) Priority: 28.09.1994 GB 9419663
(43) Date of publication of application: 16.07.1997
(73) Proprietor: British Nuclear Fuels PLC, Risley Warrington Cheshire, WA3 6AS (GB)
(72) Inventor: WHORLOW, Raymond, John, Streat Sussex BN6 8RY (GB); JAYAWANT, Bhalchandra, Vinayak, Nr. Lewes East Sussex BN7 3LN (GB)
(74) Representative: Jackson, Richard Eric
(86) International application number: GB9502244
(87) International publication number: WO9610135

(56) References cited:
- DE-A- 2 337 696
- DE-A- 3 844 563
- FR-A- 2 486 730
- FR-A- 2 492 020
- US-A- 4 983 870

## Description

This invention relates to electromagnetic bearings, and in particular to an electromagnetic bearing arrangement for use with a cylinder or ring rotating at high speed.

The present applicant has developed an energy storage and conversion apparatus wherein a cylinder acts as a flywheel or rotor for spinning about a stationary stator to store energy in the apparatus as kinetic energy of the rotor. The rotor includes permanently magnetised regions which interact with the magnetic flux produced by the stator to drive the rotor about the stator. Suspension of the rotor about the stator is achieved by means of annular electromagnetic bearings acting on the inside surface of the rotor at either end of the rotor.

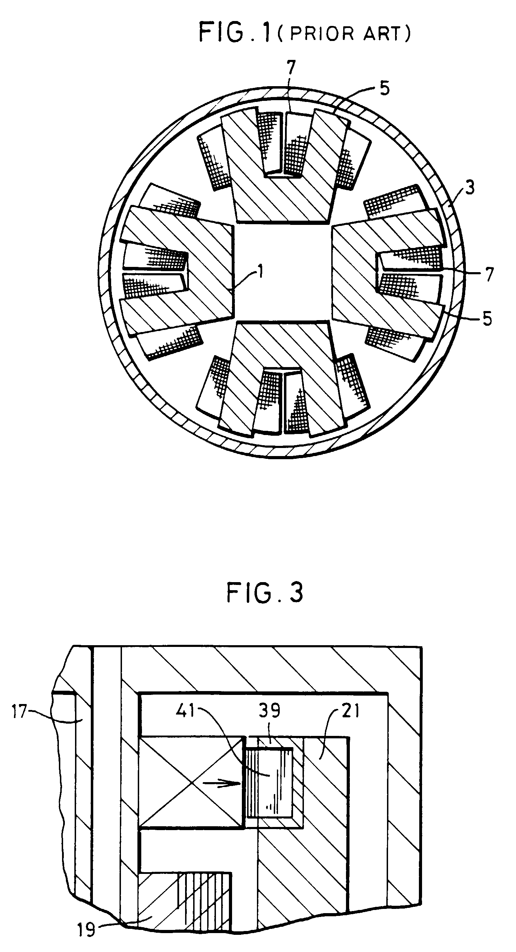

As shown in Figure 1, each prior art electromagnetic bearing comprises an iron or other magnetically permeable core 1 within the rotor 3 defining a plurality of pole faces 5 facing the inside surface of the rotor 3. Coils 7 are wound around the poles of the core 1 such that, when the coils 7 are energised, magnetic flux passes out of or into the pole faces 5 via the rotor 3. Annular laminations (not shown) of magnetically permeable material are formed on the inside surface of the rotor 3 at either end of the rotor 3, facing the pole faces 5 of the core 1. Thus, by controlling the strength of the magnetic flux passing from the poles of the core 1 to the rotor 3 and back, the position of the rotor 3 about the stator can be controlled. The rotor can, therefore, be suspended without the need for mechanical bearings.

If the rotor is rotated at high speed, such as 100,000 rpm or above, the diameter of the rotor will increase due to the centrifugal forces acting on the rotor wall. When this occurs, stresses are produced in the annular laminations of the electromagnetic bearings and these can cause the laminations to crack or buckle and fail. This is a particular problem when the material from which the rotor wall is manufactured stretches more readily than the material from which the annular laminations are made.

In the light of the foregoing, the present invention has been made to overcome the problems associated with cracking of the annular laminations which can occur when a rotor rotates at high speed.

According to the present invention, there is provided an electromagnetic bearing for suspending a rotor about a stator positioned within the rotor, the bearing comprising a core defining a pair of poles, coils mounted on the core which, when energised, produce magnetic flux which passes from one pole of the pole pair to the other pole of the pole pair, and magnetically permeable means associated with the rotor for interacting, in use, with the magnetic flux produced by the coils to suspend the rotor relative to the core, characterised in that the poles of the pole pair are spaced axially relative to the rotor, and the magnetically permeable means comprise a plurality of laminations arranged annularly within the rotor, each lamination extending substantially parallel and radially to the axis of the rotor.

By incorporating laminations which extend parallel and radially to the axis of the rotor, radial expansion of the rotor as the rotor spins at high speed does not result in cracking of the magnetically permeable material associated with the rotor. Hence, higher speeds and greater energy storage can be achieved before failure of the apparatus occurs.

Preferably the laminations form a complete annulus around the rotor, in use. In theory, however, distinct regions incorporating laminations could be used, but this would not be as efficient as a complete annulus.

The laminations may each be between 1-50 microns thick, more preferably between 1-10 microns thick. Any other appropriate thickness could, however, alternatively be used depending upon the characteristics of the material from which the laminations are made, the expansion of the rotor upon which the laminations are mounted, etc.

Preferably the laminations are mounted in a backing ring which provides support for the laminations.

The backing ring preferably has a square C-shaped cross section to facilitate mounting and assembly of the laminations.

The backing ring may be made from steel, although any other appropriate material could alternatively be used.

Preferably the poles of the core have curved pole faces corresponding to the shape of the rotor surface.

Although an electromagnetic bearing according to the present invention could be used with any suitable apparatus for suspending a rotor or other item, the invention has been made primarily with the idea of using the electromagnetic bearing in an energy storage and conversion apparatus comprising a rotor and a stator within the rotor adapted to drive the rotor to store energy as kinetic energy of the rotor, wherein energy stored in the rotor can be withdrawn when the stator and rotor act as a generator.

When using an electromagnetic bearing according to the present invention in an energy storage and conversion apparatus, the rotor of the apparatus is preferably manufactured from a fiber composite material. As a result, the rotor can rotate at extremely high speed before failure will occur. Hence, a significant amount of energy can be stored.

To assist smooth running of the rotor, the rotor preferably spins within a vacuum chamber to reduce friction losses.

A specific embodiment of the present invention is now described, by way of example only, with reference to the accompanying drawings, in which:-
Figure 1 is a sectional plan view of a prior art electromagnetic bearing of an energy storage and conversion apparatus;
Figure 2 is a sectional side view of an energy storage and conversion apparatus incorporating electromagnetic bearings according to the present invention in schematic form;
Figure 3 is an enlarged view of part of the energy storage and conversion apparatus of Figure 2;
Figure 4 is a schematic perspective view of one end of the rotor of the energy storage and conversion apparatus of Figure 2 showing the annular ring of the electromagnetic bearing; and
Figure 5 is a detailed perspective view of a core of an electromagnetic bearing according to the present invention with the coils of the bearing shown in phantom lines mounted thereon.

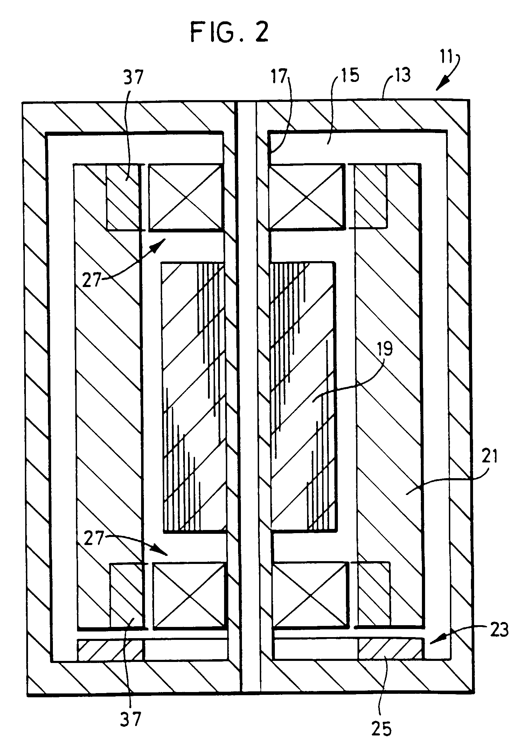

With reference to Figure 2 of the drawings, an energy storage and conversion apparatus 11 comprises an outer casing 13 defining a vacuum chamber 15. A mounting post 17 carries a stator 19 which either drives a rotor 21 to store energy as kinetic energy of the rotor 21 or acts with the rotor 21 as a generator to release energy stored in the rotor 21. To enable the stator 19, which comprises a core defining pole faces and a plurality of coils (not shown), to drive the rotor 21, the rotor 21 incorporates an annulus of alternating permanent magnets (not shown) so that the stator 19 and rotor 21 act as a motor when the coils of the stator 19 are energised. Conversely, energy can be withdrawn from the rotor 21 in the form of electrical energy from the stator 19 by allowing the stator 19 and rotor 21 to act as a generator.

The rotor 21 is made from fibre composite material, possibly carbon fibre, glass fibre, etc. As a result, the rotor 21 can spin at extremely high speeds, in the order of 100,000 - 200,000 rpm without failing. The rotor 21 is suspended vertically by means of an axial magnetic bearing 23 comprising a permanent magnet 25 mounted on the floor of the casing 13 and a magnet (not shown) of opposite polarity mounted on the end of the rotor 21. The rotor 21 is, therefore, repelled by the permanent magnet 25, the weight of the rotor 21 being counterbalanced by the force applied by the permanent magnet 25 on the end of the rotor 21.

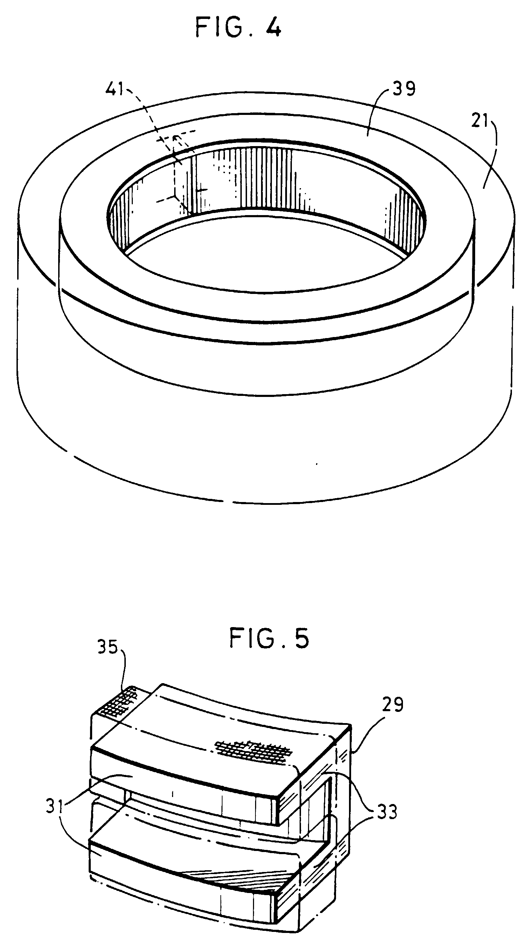

Radial positioning of the rotor 21 is provided by electromagnetic bearings 27 mounted at either end of the rotor 21. Each radial bearing 27 comprises four individual core pieces 29 (cf. Figure 5) arranged at 90° about the mounting post 17. As can be seen from Figure 5, the core 29 of each electromagnetic bearing provides a pair of pole faces 31 spaced axially relative to the rotor 21. The pole faces 31 are curved slightly to match the inside curvature of the rotor 21. Further, the pole faces 31 are formed on poles 33, the opposite ends of which are joined to produce the complete core 29 having an essentially C-shaped cross section. Coils 35 are mounted on the poles 33, as shown in Figure 5.

When the coils 35 are energised, magnetic flux is produced which follows the path of the core 29 and exits from one pole face 31 and enters the core 29 by the other pole face 31 of the pair. The magnetic flux which passes from one pole face to the other interacts with a magnetically permeable layer 37 positioned on the inside surface of the rotor 21. As can be seen clearly in Figures 3 and 4, the layer 37, which is annular, comprises a steel backing ring 39 having a square C-shaped cross section which accommodates a plurality of axially laid laminations 41. Each lamination 41 is between 1-10 microns thick and is essentially rectangular, as shown in Figures 3 and 4.

When the coils 35 of the electromagnetic bearings are energised, magnetic flux, as mentioned above, flows out of one pole face 31, interacts with the layer 37 by passing through the laminations 41 in an axial direction relative to the rotor 21 and flows back into the second pole face 31 of the pole pair. As a result, the magnetic flux does not have to cross any air gaps when within the rotor layer 37, which air gaps would reduce significantly the efficiency of the bearing. Further, as the rotor 21 spins at high speed, the rotor 21 and backing ring 39 can expand due to centrifugal forces. When this occurs, the laminations 41 do not crack since the layer 37 is not formed in one piece but has a plurality of laminations 41 which can move relative to each other.

As will be understood from the foregoing, electromagnetic bearings according to the present invention provide a distinct improvement over the known prior art bearings. Additionally, due to the C-shaped cross section of the backing ring 39, assembly of the layer 37 is simple to achieve because the laminations 41 need only to be mounted in the backing ring 39. Some form of adhesive may, if necessary, be applied to the backing ring 39 before the laminations are inserted to ensure that the laminations are held in position at all times.

Although the laminations 41 may be manufactured from any appropriate magnetically permeable material, the material to be used is preferably an alloy such as ROTELLOY 5 (Registered Trade Mark), or similar, which has been specifically developed as a high strength rotor material. Further, by suspending the rotor 21 using electromagnetic bearings 27, friction losses from the rotor 21 associated with mechanical bearings are avoided. The fact that the rotor 21 spins in a vacuum chamber 15 also assists to reduce energy losses.

It will of course be understood that the present invention has been described above purely by way of example, and that modifications of detail can be made within the scope of the invention as defined in the claims.

## Claims

1. An electromagnetic bearing (27) for suspending a rotor (21) about a stator (19) positioned within the rotor (21), the bearing (27) comprising a core (29) defining a pair of poles (33), coils (35) mounted on the core (29) which, when energised, produce magnetic flux which passes from one pole (33) of the pole pair to the other pole (33) of the pole pair, and magnetically permeable means (37) associated with the rotor (21) for interacting, in use, with the magnetic flux produced by the coils (35) to suspend the rotor (21) relative to the core (29), characterised in that the poles (33) of the pole pair are spaced axially relative to the rotor (21), and the magnetically permeable means comprise a plurality of laminations (41) arranged annularly within the rotor (21), each lamination (41) extending substantially parallel and radially to the axis of the rotor (21).

2. A bearing as claimed in claim 1, wherein the laminations (41) form a complete annulus around the rotor (21), in use.

3. A bearing as claimed in any preceding claim, wherein the laminations (41) are each between 1-50 microns thick, more preferably between 1-10 microns thick.

4. A bearing as claimed in any preceding claim, wherein the laminations (41) are mounted in a backing ring (39).

5. A bearing as claimed in claim 4, wherein the backing ring (39) has a square C-shaped cross section.

6. A bearing as claimed in claim 4 or claim 5, wherein the backing ring (39) is manufactured from steel.

7. A bearing as claimed in any preceding claim, wherein the poles (33) have curved pole faces (31) corresponding to the shape of the rotor surface.

8. An energy storage and conversion apparatus (11) comprising a cylindrical rotor (21), a stator (19) within the rotor (21) for driving the rotor (21) to store energy as kinetic energy of the rotor and an electromagnetic bearing (27) according to any preceding claim for suspending the rotor (21) about the stator (19).

9. An apparatus as claimed in claim 8, wherein the rotor (21) is manufactured from fibre composite material.

10. An apparatus as claimed in claim 8 or claim 9, wherein the rotor (21) spins in a vacuum chamber (15).

11. An apparatus as claimed in any one of claims 8 to 10, wherein the rotor (21) is radially suspended about the stator (19) by means of electromagnetic bearings (27) positioned at either end of the rotor (21).

## Patentansprüche

1. Elektromagnetisches Lager (27) zum Aufhängen eines Rotors (21) um einen innerhalb des Rotors (21) positionierten Stator (19), wobei das Lager (27) einen Kern (29) umfaßt, der ein Paar von Polen (33) definiert, und Spulen (35) auf dem Kern (29) aufgebracht sind, die, wenn erregt, magnetischen Fluß, der von einem Pol (33) des Polpaares zum anderen Pol (33) des Polpaares geht, erzeugen, und magnetisch permeable Mittel (37) dem Rotor (21) zugeordnet sind, um im Betrieb in Wechselwirkung mit dem durch die Spulen (35) erzeugten magnetischen Fluß zu treten und um den Rotor (21) relativ zum Kern (29) aufzuhängen, dadurch gekennzeichnet, daß die Pole (33) des Polpaares axial relativ zum Rotor (21) beabstandet sind und die magnetisch permeablen Mittel eine Vielzahl von Laminierungen (41) umfassen, die ringförmig innerhalb des Rotos (21) angeordnet sind, wobei jede Laminierung (41) sich im wesentlichen parallel und radial zur Achse des Rotors (21) erstreckt.

2. Lager nach Anspruch 1, wobei die Laminierungen (41) einen vollständigen Ring um den Rotor (21) im Betrieb bilden.

3. Lager nach einem der vorhergehenden Ansprüche, wobei die Laminierungen (41) je zwischen 1-50 Mikron dick, bevorzugt zwischen 1-10 Mikron dick, sind.

4. Lager nach einem der vorhergehenden Ansprüche, wobei die Laminierungen (41) in einem Stützring (39) gelagert sind.

5. Lager nach Anspruch 4, wobei der Stützring (39) einen rechteckigen, insbesondere quadratischen C-förmigen Querschnitt hat.

6. Lager nach Anspruch 4 oder 5, wobei der Stützring (39) aus Stahl hergestellt ist.

7. Lager nach einem der vorhergehenden Ansprüche, wobei die Pole (33) gekrümmte Polflächen (31) entsprechend der Gestalt der Rotorfläche haben.

8. Energiespeicher- und Umwandlungsvorrichtung (11), die einen zylindrischen Rotor (21), einen Stator (19) innerhalb des Rotors (21), zum Antrieb des Rotors (21), für das Speichern von Energie als kinetische Energie des Rotors und ein elektomagnetisches Lager nach einem der vorhergehenden Ansprüche zum Aufhängen des Rotors (21) um den Stator (19) aufweist.

9. Vorrichtung nach Anspruch 8, wobei der Rotor (21) aus Faserverbundmaterial hergestellt ist.

10. Vorrichtung nach Anspruch 8 oder 9, wobei der Rotor (21) in einer Vakuumkammer (15) umläuft.

11. Vorrichtung nach einem der Ansprüche 8 bis 10, wobei der Rotor (21) radial um den Stator (19) mittels elektromagnetischer Lager (27), die an beiden Enden des Rotors (21) positioniert sind, aufgehängt ist.

## Revendications

1. Palier électromagnétique (27) pour suspendre un rotor (21) autour d'un stator (19) positionné à l'intérieur du rotor (21), le palier (27) comprenant un noyau (29) définissant une paire de pôles (33), des bobines (35) montées sur le noyau (29) et qui, lorsqu'elles sont excitées, produisent un flux magnétique qui est transmis d'un pôle (33) de la paire de pôles à l'autre pôle (33) de la paire de pôles, des moyens perméables magnétiquement (36), qui sont associés au rotor (21) pour coopérer, en fonctionnement, avec le flux magnétique produit par les bobines (35) pour suspendre le rotor (21) par rapport au noyau (29), caractérisé en ce que les pôles (33) de la paire de pôles sont espacés axialement par rapport au rotor (21), et les moyens perméables magnétiquement comprennent une pluralité de lamelles (41) disposées annulairement à l'intérieur du rotor (21), chaque lamelle (41) s'étendant essentiellement parallèlement et radialement à l'axe du rotor (21).

2. Palier selon la revendication 1, dans lequel les lamelles (41) forment, en fonctionnement, un anneau complet autour du rotor (21).

3. Palier selon l'une quelconque des revendications précédentes, dans lequel les lamelles (41) possèdent chacune une épaisseur comprise entre 1-50 micromètres, de façon plus préférentielle une épaisseur entre 1-10 micromètres.

4. Palier selon l'une quelconque des revendications précédentes, dans lequel les lamelles (41) sont montées dans un anneau de support (39).

5. Palier selon la revendication 4, dans lequel l'anneau de support (39) possède une section transversale en forme de C carré.

6. Palier selon la revendication 4 ou la revendication 5, dans lequel l'anneau de support (39) est réalisé en acier.

7. Palier selon l'une quelconque des revendications précédentes, dans lequel les pôles (33) possèdent des faces polaires courbes (31) correspondant à la forme de la surface du rotor.

8. Appareil de stockage et de conversion d'énergie (11) comprenant un rotor cylindrique (21), un stator (19) situé dans le rotor (21) pour entraîner le rotor (21) pour stocker une énergie sous la forme d'une énergie cinétique du rotor et un palier électromagnétique (27) selon l'une quelconque des revendications précédentes, pour suspendre le rotor (21) autour du stator (19).

9. Appareil selon la revendication 8, dans lequel le rotor (21) est réalisé en un matériau composite formé de fibres.

10. Appareil selon la revendication 8 ou 9, dans lequel le rotor (21) tourne dans une chambre à vide (15).

11. Appareil selon l'une quelconque des revendications 8 à 10, dans lequel le rotor (21) est suspendu radialement autour du stator (19) au moyen de paliers électromagnétiques (27) disposés sur l'une ou l'autre des extrémités du rotor (21).
